# EUROPEAN PATENT SPECIFICATION

(11) **EP 0 645 845 B1**
(45) Date of publication and mention of the grant of the patent: **23.06.1999**
(21) Application number: 94113675.6
(22) Date of filing: 01.09.1994
(51) Int. Cl.: H01R 13/518, H05K 7/14

(54) **Device for coupling electric components in supporting frames**
Vorrichtung zum Kuppeln von elektrischen Komponenten in Halterahmen
Dispositif pour connecter des composants électroniques dans un cadre support

(30) Priority: 07.09.1993 IT MI930695 U
(43) Date of publication of application: 29.03.1995
(73) Proprietor: GEWISS S.p.A., I-24069 Cenate Sotto (Bergamo) (IT)
(72) Inventor: Bosatelli, Domenico, I-24069 Cenate Sotto (Bergamo) (IT)
(74) Representative: Modiano, Guido, Dr.-Ing.

(56) References cited:
- EP-A- 0 339 405
- DE-C- 3 543 885
- FR-A- 2 118 910
- US-A- 4 046 449

## Description

The present invention relates to a device for coupling electric components in supporting frames.

As is known, frames for supporting electric components such as switches, outlets, indication devices and so forth are currently commercially available and are manufactured in different lengths according to the number of components they support.

The frames normally have a flexible tooth on their transverse side; said tooth couples in a snap-together manner with a complementary tooth which is provided on the oppositely located edges of the casing of the electric component. Coupling is normally achieved by inserting the electric component from the rear face of the frame.

In the case of frames having relatively large dimensions, i.e. frames preset for three or more components, during the insertion of said components the transverse sides on which the elastic tooth is provided may splay, thus making component retention unreliable.

Likewise, under stress, if the components are subjected to pressure they may disengage from the frame due to the splaying of the sides, i.e. due to the mutual spacing of the transverse sides, which allows the disengagement of the tooth from the complementary tooth.

US-A-4 046 449 discloses a system for interchangeable attachment of electrical equipment, as described above, and which is affected by the above-mentioned drawbacks.

A principal aim of the invention is indeed to solve the above described problem by providing a device for coupling electric components in supporting frames which allows to create a stiffening element that prevents the mutual spacing of the transverse sides, without thereby entailing cross-members or similar elements that join the transverse sides, since such cross-members would prevent the various components from being arranged mutually adjacent.

Within the scope of this aim, a particular object of the invention is to provide a coupling device which in addition to making the frame stable is also capable of facilitating and guiding the insertion of the various components.

Another object of the-present invention is to provide a device which, by virtue of its particular constructive characteristics, is capable of giving the greatest assurances of reliability and safety in use.

Another object of the present invention is to provide a device which, despite having improved characteristics, does not create additional complications during manufacture and does not change the conventional method for applying electric components.

This aim, these objects and others which will become apparent hereinafter are achieved by a device for coupling electric components in supporting frames, as defined in claim 1.

Further characteristics and advantages will become apparent from the following detailed description of a device for coupling electric components in supporting frames, illustrated only by way of non-limitative example in the accompanying drawings, wherein:
figure 1 is a schematic exploded perspective view of a component with a portion of the frame provided with the coupling device;
figure 2 is a schematic front view of a component inserted in a frame;
figure 3 is a top view of the coupling of a component to the frame, with one edge of the frame removed;
figure 4 is a sectional view, taken along the plane IV-IV of figure 2;
figure 5 is a sectional view, taken along the plane V-V of figure 2.

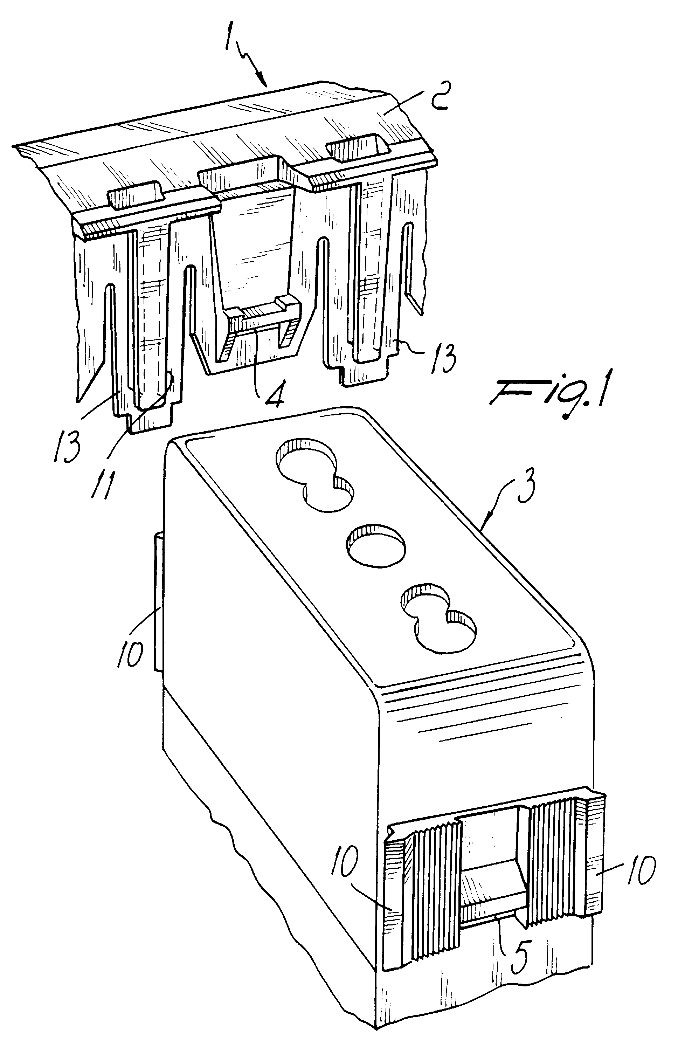

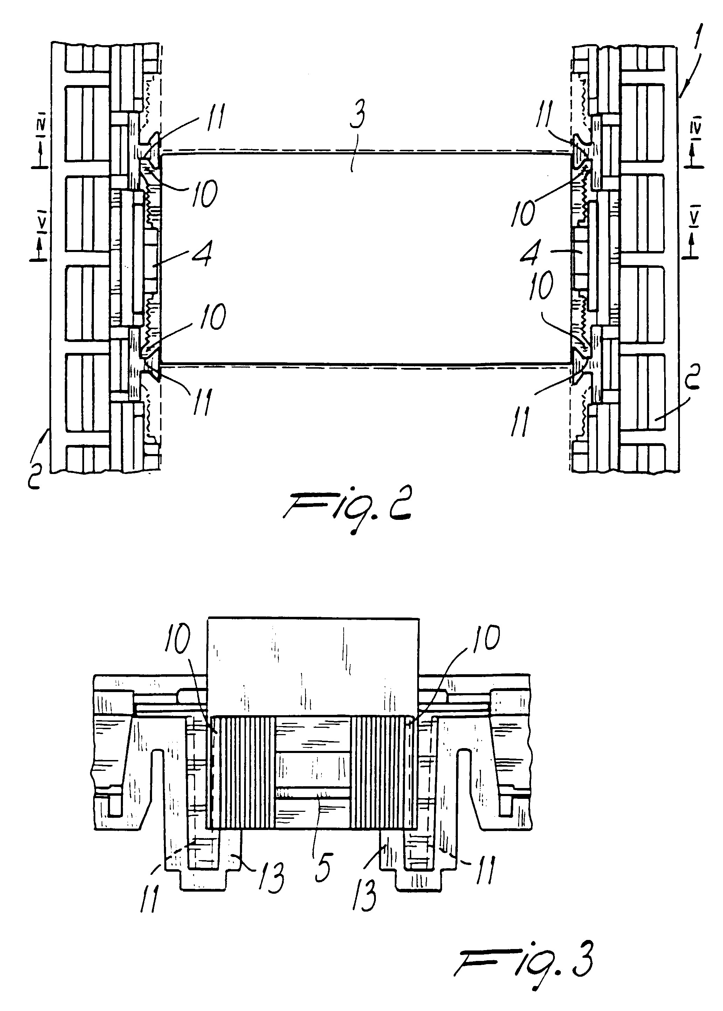

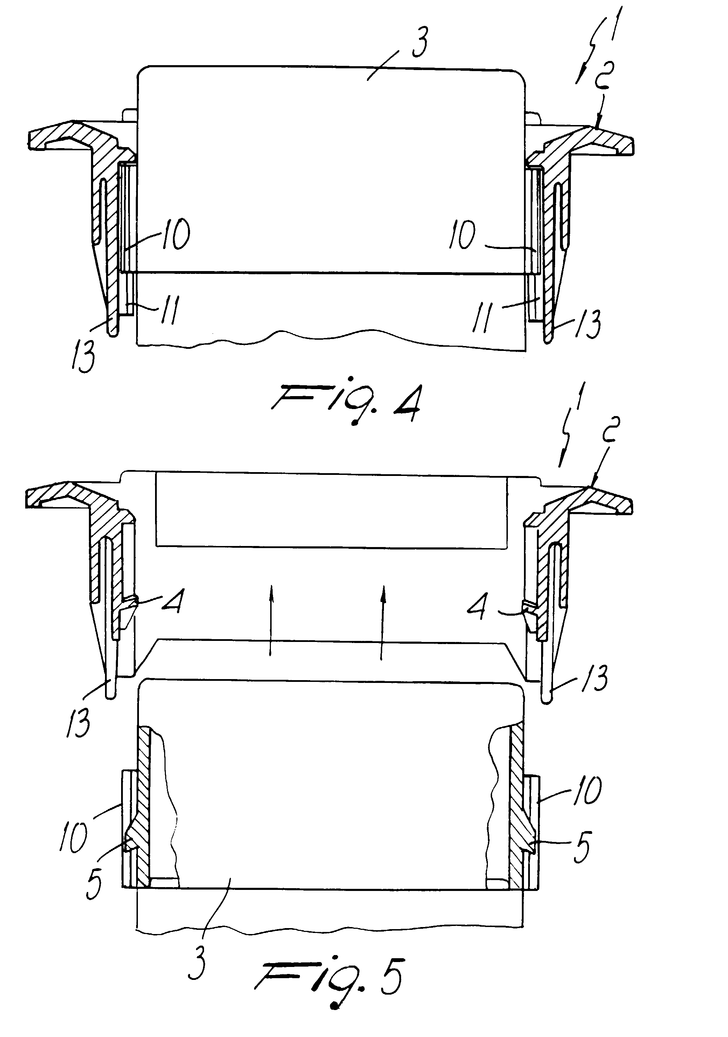

With reference to the above figures, the device for coupling electric components in supporting frames according to the invention comprises a frame, generally designated by the reference numeral 1, which has in a per se known manner a flanged border 2 that delimits the region for the coupling of the electric components, which are generally designated by the reference numeral 3.

At the inner opening delimited by the border 2, the oppositely located transverse edges of the frame 1 form a flexible tooth, designated by the reference numeral 4, which couples in a snap-together manner with a complementary tooth 5 formed on the oppositely located edges of the casing of an electric component, generally designated by the reference numeral 3.

This coupling allows to apply, in a per se known manner, a retaining action along a direction that is substantially at right angles to the plane of arrangement of the frame and, more specifically, to the plane formed by the border 2. It is of course possible to reverse the coupling, by providing the flexible tooth on the component and the complementary tooth on the frame.

The particularity of the invention resides in the fact that engagement means are provided on the casing of the component, laterally to the region provided with the complementary tooth 5; said engagement means are advantageously formed by male dovetail portions 10 which couple in corresponding guiding means constituted by female dovetail portions, designated by the reference numeral 11, which are formed on protrusions 13 that extend from the border at the side of the flexible tooth 4.

Advantageously, the female dovetail portions 11 taper slightly so that the end that is farthest from the border 2 is narrower, so as to form a guide for the insertion of the component.

The dovetail coupling allows to provide engagement and guiding means that apply a retaining action along a direction that is substantially parallel to the plane of arrangement of the border 2 and perpendicular to the transverse edges.

In practice the component itself forms a stiffening cross-member for mutually connecting the oppositely arranged transverse edges, preventing splaying, i.e. spacing of the transverse edges, which would cause disengagement of the tooth from the complementary tooth, even in the presence of frames provided for a large number of components.

From what has been described above it is thus evident that the invention achieves the intended aim and objects, and in particular the fact is stressed that in the adopted solution one obtains a unit that is truly stable and monolithic, since the casing of the component is used as an element for linking and stiffening the transverse edges.

In practice, although the best results have been obtained by using plastic material, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for coupling electric components in supporting frames, which comprises, on two oppositely arranged edges of said supporting frame (1), a tooth (4) that can engage a complementary tooth (5) correspondingly formed on oppositely arranged edges of a casing (3) of an electric component in order to apply a retaining action along a direction that is substantially at right angles to the plane of arrangement of said frame (1) in which the edges of the frame lie, one of said teeth (4, 5) being elastic, characterized in that it comprises, on said casing (3) of said component and laterally with respect to said complementary tooth (5), engagement means (10) that can be coupled in guiding means (11) which are formed on said frame (1) and are suitable to apply a retaining action along a direction that is substantially parallel to the plane of arrangement of said frame (1) and is substantially perpendicular to said oppositely arranged edges of said supporting frame (1).

2. The device according to claim 1, characterized in that said engagement means are constituted by male dovetail portions (10) formed on said casing (3) of an electric component.

3. The device according to the preceding claims, characterized in that said guiding means are constituted by female dovetail portions (11) which are formed on protrusions (13) that extend from the perimetric border of said supporting frame (1).

4. The device according to claim 3, characterized in that said female dovetail portions (11) are parallel to the direction of insertion of the casing into said frame.

5. The device according to claim 1, characterized in that said male and female dovetail portions (10, 11) consitute a stiffening element of said frame (1).

## Patentansprüche

1. Vorrichtung zum Kuppeln von elektrischen Komponenten in Halterahmen, welche an zwei gegenüberliegend angeordneten Kanten des Halterahmens (1) einen Zahn (4) aufweist, der in einen komplementären Zahn (5) eingreifen kann, der entsprechend auf gegenüberliegend angeordneten Kanten eines Gehäuses (3) einer elektrischen Komponente ausgebildet ist, um eine Verankerung entlang einer Richtung zu bewirken, die im wesentlichen rechtwinklig zur Ebene der Anordnung des Rahmens (1) ist, in welcher die Kanten des Rahmens liegen, wobei einer der Zähne (4,5) elastisch ist,
dadurch gekennzeichnet,
daß diese auf dem Gehäuse (3) der Komponente und seitlich mit Bezug auf den komplementären Zahn (5) Eingriffsmittel (10) aufweist, die mit Führungsmitteln (11) kuppelbar sind, die in dem Rahmen (1) ausgebildet sind, und geeignet sind, eine Verankerung entlang einer Richtung zu bewirken, die im wesentlichen parallel zur Ebene der Anordnung des Rahmens (1) und im wesentlichen rechtwinklig zu den gegenüberliegend angeordneten Kanten des Stützrahmens (1) ist.

2. Vorrichtung nach Anspruch 1,
dadurch gekennzeichnet,
daß die Eingriffsmittel von männlichen Schwalbenschwanzbereichen (10) gebildet sind, die auf dem Gehäuse (3) einer elektronischen Komponente ausgebildet sind.

3. Vorrichtung nach irgendeinem vorangehenden Anspruch,
dadurch gekennzeichnet,
daß die Führungsmittel von weiblichen Schwalbenschwanzbereichen (11) gebildet sind, die auf Vorsprüngen (13) ausgebildet sind, die sich vom umfänglichen Rand des Stützrahmens (1) erstrecken.

4. Vorrichtung nach Anspruch 3,
dadurch gekennzeichnet,
daß die weiblichen Schwalbenschwanzbereiche (11) parallel zur Richtung der Einführung des Gehäuses in den Rahmen sind.

5. Vorrichtung nach Anspruch 1,
dadurch gekennzeichnet,
daß die männlichen und weiblichen Schwalbenschwanzbereiche (10,11) ein Versteifungselement des Rahmens (1) bilden.

## Revendications

1. Dispositif pour connecter des composants électroniques dans un cadre support qui comprend, sur deux bords opposés dudit cadre support (1), une dent (4) qui peut s'engager dans une dent complémentaire (5) formée de façon correspondante sur des bords opposés d'un boîtier (3) d'un composant électrique afin d'appliquer une action de maintien le long d'une direction qui est sensiblement à angle droit par rapport au plan dans lequel s'étend ledit cadre (1) et dans lequel se trouvent les bords du cadre, l'une desdites dents (4, 5) étant élastique, caractérisé en ce qu'il comprend sur ledit boîtier (3) dudit composant, et latéralement par rapport à ladite dent complémentaire (5), des moyens d'engagement (10) qui peuvent être connectés à des moyens de guidage (11) formés sur ledit cadre (1), et qui sont aptes à appliquer une action de maintien le long d'une direction sensiblement parallèle au plan dans lequel est disposé ledit cadre (1), et qui est sensiblement perpendiculaire auxdites parois opposées dudit cadre de support (1).

2. Le dispositif selon la revendication 1, caractérisé en ce que lesdits moyens d'engagement sont formés par des parties en queue d'arronde mâle (10) formées sur ledit boîtier (3) du composant électrique.

3. Le dispositif selon les revendications précédentes, caractérisé en ce que lesdits moyens de guidage sont constitués par des parties de queue d'arronde femelle (11), qui sont formées sur des saillies (13) qui s'étendent à partir de la paroi externe dudit cadre de support (1).

4. Le dispositif selon la revendication 3, caractérisé en ce que lesdites parties de queue d'arronde femelle (11) sont parallèles à la direction d'insertion du boîtier dans ledit cadre.

5. Le dispositif selon la revendication 1, caractérisé en ce que lesdites parties d'arronde mâle et femelles (10, 11) constituent un élément de rigidification dudit cadre (1).
